# EUROPEAN PATENT APPLICATION

(11) **EP 4 488 745 A1**
(43) Date of publication of application: **08.01.2025**
(21) Application number: 23787679.2
(22) Date of filing: 11.04.2023
(51) Int. Cl.: G02F 1/01, G02B 6/10

(54) **PHASE SHIFTER, ELECTRO-OPTICAL DEVICE, OPTICAL COMMUNICATION SYSTEM, AND METHOD FOR MANUFACTURING PHASE SHIFTER**

(30) Priority: 16.04.2022 CN 202210400376
(71) Applicant: Huawei Technologies Co., Ltd., Shenzhen, Guangdong 518129 (CN)
(72) Inventor: YAO, Zhanshi, Shenzhen, Guangdong 518129 (CN); ZHU, Shiyang, Shenzhen, Guangdong 518129 (CN)
(74) Representative: Pfenning, Meinig & Partner mbB
(86) International application number: PCT/CN2023/087553
(87) International publication number: WO 2023/198035

(57) **Abstract**

Disclosed are a phase shifter, an electro-optic device, an optical communication system, and a phase shifter manufacturing method. The phase shifter includes a substrate (100), an optical waveguide (104), electrodes, and transition structures. The optical waveguide (104) is disposed on the substrate (100). Perpendicular to an extension direction of the optical waveguide (104), the electrodes are respectively disposed on two sides of the optical waveguide (104). The transition structure is located between the optical waveguide (104) and the electrode. A refractive index of an end that is of the substrate (100) and that is close to the optical waveguide (104) is less than a refractive index of the optical waveguide (104), and dielectric constants of the transition structures are greater than a dielectric constant of the optical waveguide (104). The dielectric constants of the transition structures are greater than the dielectric constant of the optical waveguide (104). Therefore, when a voltage is applied by the electrodes to the optical waveguide (104), the voltage shared by a material between the electrodes and the optical waveguide (104) can be reduced, to increase the voltage applied by the electrodes to the optical waveguide (104). This can reduce modulation voltages required by phase shifters when sizes of the phase shifters are the same. In addition, it can also be satisfied that the sizes of the phase shifters can be reduced under a same modulation voltage.

## Description

### TECHNICAL FIELD

This application relates to the field of electro-optic technologies, and in particular, to a phase shifter, an electro-optic device, and a phase shifter manufacturing method.

### BACKGROUND

With continuous emergence and popularization of emerging services such as 5G, the internet of things, big data, and cloud computing, a rapidly increasing data transmission amount poses an increasingly high requirement on performance of an optical communication system. For example, in an optical communication system including a transmitter, a transmission medium, and a receiver, the transmitter converts an electrical signal into an optical signal and outputs the optical signal, the optical signal is propagated in the transmission medium, and then the receiver receives the optical signal and converts the optical signal into the electrical signal. A modulator in the transmitter is responsible for conversion from the electrical signal to the optical signal. A phase shifter in the modulator applies a voltage to a waveguide via electrodes, to modulate intensity or a phase of the optical signal, thereby improving efficiency and bandwidth in the conversion process.

Generally, because the waveguide is coated by a cladding layer, most of the voltage applied by the electrodes is shared to the cladding layer of the phase shifter. As a result, an electric field applied by the electrodes to the waveguide is weak, and modulation efficiency of the phase shifter is low.

### SUMMARY

In view of this, this application provides a phase shifter, an electro-optic device, an optical communication system, and a phase shifter manufacturing method, to improve modulation efficiency of the phase shifter.

According to a first aspect of embodiments of this application, a phase shifter is provided, including: a substrate, an optical waveguide, electrodes, and transition structures. The optical waveguide is disposed on the substrate. Perpendicular to an extension direction of the optical waveguide, the electrodes are respectively disposed on two sides of the optical waveguide. The transition structure is located between the optical waveguide and the electrode. A refractive index of an end that is of the substrate and that is close to the optical waveguide is less than a refractive index of the optical waveguide, and dielectric constants of the transition structures are greater than a dielectric constant of the optical waveguide. The dielectric constants of the transition structures are greater than the dielectric constant of the optical waveguide. Therefore, when a voltage is applied by the electrodes to the optical waveguide, the voltage shared by a material between the electrodes and the optical waveguide can be reduced, to increase the voltage applied by the electrodes to the optical waveguide. This improves modulation efficiency of the phase shifter. This can reduce modulation voltages required by phase shifters when sizes of the phase shifters are the same. In addition, it can also be satisfied that the sizes of the phase shifters can be reduced under a same modulation voltage.

In a possible implementation, the transition structures include a first transition structure and a second transition structure, and the electrodes include a first electrode and a second electrode. Perpendicular to the extension direction of the optical waveguide, the first electrode and the second electrode are respectively located on the two sides of the optical waveguide. The first transition structure is located between the optical waveguide and the first electrode, and the second transition structure is located between the optical waveguide and the second electrode. The refractive index of the end that is of the substrate and that is close to the optical waveguide is less than the refractive index of the optical waveguide, and the dielectric constants of the first transition structure and the second transition structure are greater than the dielectric constant of the optical waveguide. When a voltage is applied by the first electrode and the second electrode to a ridge structure, the voltage shared by the material between the first electrode, the second electrode, and the ridge structure can be reduced, to ensure that a voltage shared by the first transition structure and the second transition structure is small, and increase the voltage applied by the first electrode and the second electrode to the ridge structure. This can reduce the modulation voltages required by the phase shifters when the sizes of the phase shifters are the same.

In a possible implementation, the optical waveguide includes a body structure and a ridge structure that are interconnected, and the ridge structure protrudes from the body structure towards a side away from the substrate. The ridge structure is disposed, so that losses lower than those of a strip waveguide can be implemented. The first transition structure and the second transition structure are separately spaced apart from the ridge structure, to prevent the transition structures from contacting the optical waveguide, and prevent the transition structures from affecting light propagation in the optical waveguide, for example, increasing losses.

In a possible implementation, perpendicular to the extension direction of the optical waveguide, the first electrode and the second electrode are separately disposed on the body structure and located on two sides of the ridge structure; and the first transition structure and the second transition structure are separately disposed on the body structure, the first transition structure is located between the ridge structure and the first electrode, and the second transition structure is located between the ridge structure and the second electrode. In this way, it can be ensured that the first electrode and the second electrode are respectively located on the two sides of the ridge structure, and the first transition structure and the second transition structure are respectively located on the two sides of the ridge structure, to increase a voltage applied to the ridge structure.

In a possible implementation, the first electrode is disposed on the first transition structure, and the second electrode is disposed on the second transition structure; and the first transition structure and the second transition structure are separately disposed on the body structure, and the first electrode and the second electrode are respectively located on two sides of the ridge structure.

In a possible implementation, the first electrode and the second electrode are separately disposed on the substrate, and the first transition structure and the second transition structure are separately disposed on the substrate. In this way, an overall thickness of the phase shifter can be reduced, and a voltage on a plate structure can be increased.

In a possible implementation, the first electrode is disposed on the first transition structure, the second electrode is disposed on the second transition structure, and the first transition structure and the second transition structure are separately disposed on the substrate.

In a possible implementation, the phase shifter further includes an insulation layer, and the insulation layer is disposed between the first electrode and the body structure and between the second electrode and the body structure, to improve device operation reliability.

In a possible implementation, the insulation layer is further disposed between the first transition structure and the body structure and between the second transition structure and the body structure.

In a possible implementation, the substrate includes a substrate layer and a first cladding layer, the first cladding layer is disposed on the substrate layer, the optical waveguide is disposed on a side that is of the first cladding layer and that is away from the substrate layer, and a refractive index of the first cladding layer is less than the refractive index of the optical waveguide. In this way, it can be ensured that a refractive index of a part that is of the substrate and that is close to the optical waveguide is less than the refractive index of the optical waveguide, so that light in the optical waveguide is propagated in a form of total reflection. A material of the first cladding layer may be silicon dioxide, silicon nitride, or the like. A material of the substrate layer may be silicon, lithium niobate, silicon dioxide, quartz, silicon carbide, sapphire, or the like.

In a possible implementation, the phase shifter further includes a second cladding layer, the second cladding layer covers a side that is of the optical waveguide and that is away from the substrate, and a refractive index of the second cladding layer is less than the refractive index of the optical waveguide. This improves reliability of light propagation in the optical waveguide in the form of total reflection. A material of the second cladding layer may be silicon dioxide, silicon nitride, air, or vacuum.

In a possible implementation, the second cladding layer is filled between the first transition structure and the ridge structure and between the second transition structure and the ridge structure, to prevent the transition structures from affecting light propagation in the optical waveguide.

In a possible implementation, a material of the optical waveguide is lithium niobate, an electro-optic polymer, or tantalum niobate.

In a possible implementation, a material of the first transition structure and/or a material of the second transition structure are/is barium titanate, titanium dioxide, aluminum oxide, magnesium oxide, LaF₃, LaYO₃, or LaAlO₃.

According to a second aspect of embodiments of this application, an electro-optic device is provided, including the phase shifter according to any one of the foregoing implementations.

In a possible implementation, the electro-optic device is an electro-optic modulator, an electro-optic switch, or an electric field sensor.

According to a third aspect of embodiments of this application, an optical communication system is provided, including the foregoing electro-optic device.

According to a fourth aspect of embodiments of this application, a phase shifter manufacturing method is provided, including: providing a substrate; forming an optical waveguide on a surface of the substrate, where a refractive index of an end that is of the substrate and that is close to the optical waveguide is less than a refractive index of the optical waveguide; and perpendicular to an extension direction of the optical waveguide, respectively forming a first electrode and a second electrode on two sides of the optical waveguide, and respectively forming a first transition structure and a second transition structure on the two sides of the optical waveguide, where the first transition structure is located between the optical waveguide and the first electrode, the second transition structure is located between the optical waveguide and the second electrode, and dielectric constants of the first transition structure and the second transition structure are greater than a dielectric constant of the optical waveguide.

In a possible implementation, an electro-optic crystal film layer is formed on the surface of the substrate, and a refractive index of an end that is of the substrate and that is close to the electro-optic crystal film layer is less than a refractive index of the electro-optic crystal film layer. The electro-optic crystal thin film is etched to form the optical waveguide.

In a possible implementation, the phase shifter manufacturing method further includes: forming an insulation layer between the first electrode and the body structure and between the second electrode and the body structure.

In a possible implementation, the phase shifter manufacturing method further includes: forming the insulation layer between the first transition structure and the body structure and between the second transition structure and the body structure.

In a possible implementation, the providing a substrate includes: forming a first cladding layer on a substrate layer to obtain the substrate, where a refractive index of the first cladding layer is less than the refractive index of the optical waveguide, and the electro-optic crystal film layer is formed on a side that is of the first cladding layer and that is away from the substrate layer.

In a possible implementation, the phase shifter manufacturing method further includes: forming a second cladding layer on a side that is of the optical waveguide and that is away from the substrate, where a refractive index of the second cladding layer is less than the refractive index of the optical waveguide.

For a specific structure of a phase shifter in the fourth aspect and a location relationship between specific structures, refer to the specific descriptions of the phase shifter in the first aspect.

### BRIEF DESCRIPTION OF DRAWINGS

FIG. 1 is a diagram of a structure of a cross section of a phase shifter according to an embodiment of this application;
FIG. 2(a) is a diagram of a structure of a cross section of a phase shifter according to an embodiment of this application;
FIG. 2(b) is a diagram of a structure of a cross section of a phase shifter according to an embodiment of this application;
FIG. 2(c) is a diagram of a structure of a cross section of a phase shifter according to an embodiment of this application;
FIG. 2(d) is a diagram of a structure of a cross section of a phase shifter according to an embodiment of this application;
FIG. 2(e) is a diagram of a structure of a cross section of a phase shifter according to an embodiment of this application;
FIG. 3 is an axonometric diagram of a phase shifter according to an embodiment of this application;
FIG. 4(a) is a diagram of a structure of an electro-optic modulator according to an embodiment of this application;
FIG. 4(b) is a diagram of a structure of an electro-optic modulator according to an embodiment of this application;
FIG. 4(c) is a diagram of a structure of an electro-optic modulator according to an embodiment of this application;
FIG. 4(d) is a diagram of a structure of an electro-optic modulator according to an embodiment of this application;
FIG. 5 is a diagram of a structure of an optical communication system according to an embodiment of this application;
FIG. 6 is a diagram of a phase shifter manufacturing method according to an embodiment of this application;
FIG. 7(a) is a diagram of a cross section of a substrate according to an embodiment of this application;
FIG. 7(b) is a diagram of forming an optical waveguide on a surface of a substrate according to an embodiment of this application;
FIG. 7(c) is a diagram of forming electrodes on an optical waveguide according to an embodiment of this application; and
FIG. 7(d) is a diagram of forming transition structures on an optical waveguide according to an embodiment of this application.

### DESCRIPTION OF EMBODIMENTS

The following describes technical solutions in embodiments of this application with reference to accompanying drawings in embodiments of this application.

In addition, all directions or location relationships mentioned in embodiments of this application are location relationships based on the accompanying drawings, are merely intended to facilitate description of this application and simplify description, but do not imply or imply a specific direction that the apparatus or element needs to have, and cannot be construed as limitations on this application. In the descriptions of this application, unless otherwise stated, "a plurality of" means two or more than two. The terms "first", "second", and the like are merely used for ease of distinguishing and description, but do not indicate a specific order or sequence. "A and/or B" in this application represents three different combination forms: A, B, or A+B. Herein, A and B represent abbreviations of corresponding structures in this application, and are merely examples for representation. Specifically, it needs to be determined based on features before and after "and/or" in this application.

A phase shifter is usually configured to modulate a phase and intensity of light. Specifically, the phase shifter usually includes a waveguide and an electrode. The light is propagated in the waveguide in a form of total reflection, and a voltage is applied by the electrodes to two sides of the waveguide, to change a refractive index of the waveguide, and further modulate propagation of an optical signal, so as to implement modulation of the phase and the intensity of the light. A magnitude of the applied voltage is changed, so that different phases and intensity of the light can be modulated. In this application, an application scenario of the phase shifter may include an electro-optic device, for example, an electro-optic modulator, an electro-optic switch, or an electric field sensor, and another electro-optic device that needs to use light phase modulation.

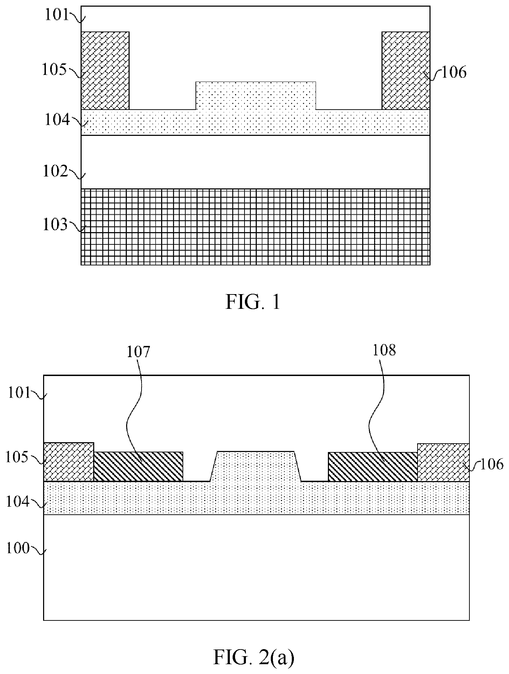

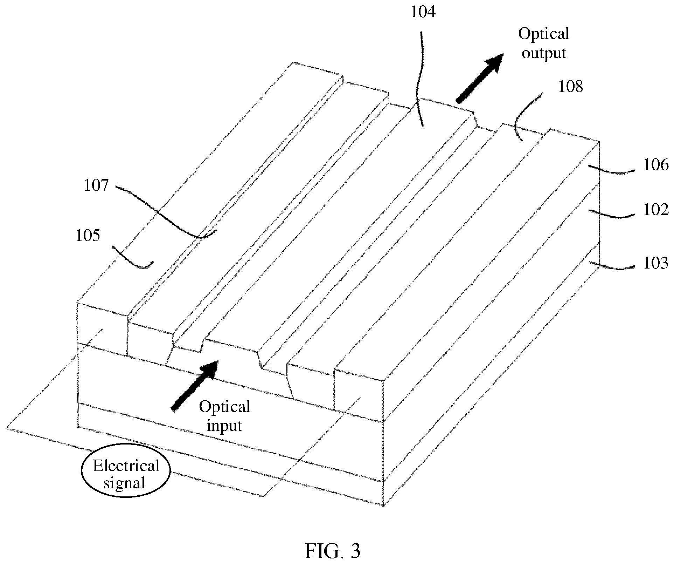

The light is usually input from one end of the phase shifter and output from the other end. A shape of the phase shifter is not limited herein. The phase shifter is presented as a whole as a structure extending from one end to the other end, for example, a structure shown in FIG. 3. In this application, the phase shifter may include a cladding layer, a substrate layer 103, an optical waveguide, electrodes, and transition structures. For location relationships between different structures in the phase shifter, refer to FIG. 1 and FIG. 2(a) to FIG. 2(e). It should be noted that structures shown in FIG. 1 and FIG. 2(a) to FIG. 2(e) are diagrams of structures of cross sections of phase shifters in different embodiments.

An optical waveguide 104 is made of an electro-optic material having a linear electro-optic effect. A material of the optical waveguide 104 may be lithium niobate, an electro-optic polymer, tantalum niobate, barium titanate, or lead zirconate titanate. For example, the material of the optical waveguide 104 is lithium niobate, and a Z crystal axis of the lithium niobate crystal is perpendicular to an extension direction of the optical waveguide, a Z axis of the lithium niobate crystal is a rotational symmetry axis of the lithium niobate crystal. The light is propagated in the optical waveguide in the form of total reflection.

A material of the substrate layer 103 may be silicon, lithium niobate, silicon dioxide, quartz, silicon carbide, sapphire, or the like. Certainly, the material of the substrate layer may alternatively be another element semiconductor material or a compound semiconductor material. The substrate layer 103 may provide mechanical support, for example, provide mechanical support for the cladding layer.

A refractive index of the cladding layer is less than a refractive index of the optical waveguide 104, and is mainly used to bind the light in the optical waveguide 104, so that an optical field is propagated in the optical waveguide 104 in the form of total reflection. The cladding layer may partially or completely cover a surface of the optical waveguide 104. In this application, the cladding layer may include a first cladding layer 102 and a second cladding layer 101. The first cladding layer 102 is located between the substrate layer 103 and the optical waveguide 104. A material of the first cladding layer 102 may be silicon dioxide, silicon nitride, or the like. The second cladding layer 101 covers a side that is of the optical waveguide 104 and that is away from the substrate layer 103, and a material of the second cladding layer 101 may be air, vacuum, silicon dioxide, silicon nitride, or the like. Optionally, the substrate layer 103 and a part of the cladding layer may jointly serve as a substrate 100. For example, the first cladding layer 102 may be bonded on the substrate layer 103 to jointly serve as the substrate 100. However, in general, it needs to be satisfied that a refractive index of a part that is of the substrate 100 and that is close to the optical waveguide 104 is less than the refractive index of the optical waveguide 104.

A dielectric constant of the transition structure is greater than 8. Optionally, the dielectric constant of the transition structure is greater than a dielectric constant of the optical waveguide 104. For example, a material of the transition structure may be barium titanate, titanium dioxide, aluminum oxide, magnesium oxide, LaF₃, LaYO₃, or LaAlO₃. The transition structure is mainly used to reduce sharing of a voltage applied by the electrodes, to increase a voltage applied to the optical waveguide 104. Optionally, a refractive index of the transition structure is less than the refractive index of the optical waveguide 104. In this application, different transition structures may be respectively described as a first transition structure and a second transition structure. Materials of different transition structures may be the same or different.

FIG. 1 is a diagram of a cross section of a phase shifter according to an embodiment of this application. The phase shifter includes an optical waveguide 104, a first electrode 105, a second electrode 106, a first cladding layer 102, a second cladding layer 101, and a substrate 103. The optical waveguide 104 includes a ridge structure and a body structure. The first electrode 105 and the second electrode 106 are separately disposed on the body structure. Perpendicular to an extension direction of the optical waveguide, the first electrode 105 and the second electrode 106 are respectively located on two sides of the ridge structure. The optical waveguide 104 is disposed between the first cladding layer 102 and the second cladding layer 101. The first cladding layer 102 is disposed on the substrate 103. The second cladding layer 101 covers the first electrode 105, the second electrode 10, and an end that is of the optical waveguide 10 and that is away from the first cladding layer 102. A refractive index of the first cladding layer 102 and a refractive index of the second cladding layer 101 are less than a refractive index of the optical waveguide 104, so that an optical field is propagated in the optical waveguide 104 in a manner of total reflection.

When a voltage is applied by the first electrode 105 and the second electrode 106 to the optical waveguide 104, the refractive index of the optical waveguide 104 may change due to a linear electro-optic effect of an electro-optic material, so that a propagation characteristic of an optical signal in the optical waveguide 104 changes, for example, a phase of the optical signal. Therefore, the optical signal can be modulated. However, dielectric constants of the first cladding layer 102 and the second cladding layer 101 are lower than a dielectric constant of the optical waveguide 104. For example, a dielectric constant of air is 1, and a dielectric constant of lithium niobate in a Z crystal axis direction is 28. As a result, most of the voltage applied by the first electrode 105 and the second electrode 106 is distributed in the second cladding layer 101, the electric field distributed inside the optical waveguide 104 is weak, and an optical signal is mainly distributed in the optical waveguide 104. Consequently, efficiency of modulating the optical field in the optical waveguide 104 is low.

An embodiment of this application further provides a phase shifter. FIG. 2(a) to FIG. 2(e) respectively show diagrams of cross sections of five different forms of phase shifters, including: a substrate 100, an optical waveguide 104, electrodes, and transition structures. The optical waveguide 104 is disposed on the substrate 100. Perpendicular to an extension direction of the optical waveguide 104, the electrodes are respectively disposed on two sides of the optical waveguide 104. The transition structure is located between the optical waveguide 104 and the electrode. A refractive index of an end that is of the substrate 100 and that is close to the optical waveguide 104 is less than a refractive index of the optical waveguide 104.

In embodiments of this application, a cross-sectional shape of the optical waveguide 104 may be presented as a rectangle or a "T" shape. Herein, the "T" shape is used as an example for description. The optical waveguide 104 includes a body structure and a ridge structure that are interconnected. Specifically, a middle location of the body structure is connected to the ridge structure, so that the body structure and the ridge structure are presented as a "T" structure as a whole. Herein, the ridge structure protrudes from the body structure towards a side away from the substrate 100, or two opposite ends of the body structure protrude from two opposite sides of the ridge structure. Generally, a height of the body structure is less than or equal to 1 µm, a height of the ridge structure is less than or equal to 1.5 µm, and a width of the ridge structure is less than or equal to 5 µm. As shown in FIG. 3, a direction pointed to by an optical input or optical output arrow in the figure is the extension direction of the optical waveguide.

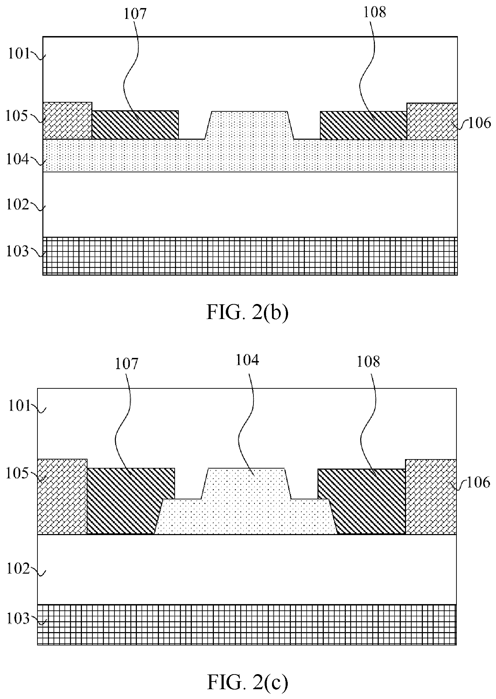

In some examples, as shown in FIG. 2(a) and FIG. 2(b), the electrodes may be disposed on the optical waveguide 104, and may be specifically disposed on the body structure, and located on a side that is of the body structure and that is away from the substrate 100. As shown in FIG. 2(c) to FIG. 2(e), the electrodes may alternatively be disposed on the substrate 100 or the transition structures, and are located on a same side of the substrate 100 together with the optical waveguide 104. Herein, in an example, the electrodes may include a first electrode 105 and a second electrode 106. Perpendicular to the extension direction of the optical waveguide 104, the first electrode 105 and the second electrode 106 are respectively located on the two sides of the optical waveguide 104. A voltage is applied jointly by the first electrode 105 and the second electrode 106 to the optical waveguide 104. Generally, disposing locations of the first electrode and the second electrode 106 are the same, and are symmetrically disposed with respect to the ridge structure.

In some examples, as shown in FIG. 2(a) and FIG. 2(b), the transition structures may be disposed on the optical waveguide 104, and may be specifically disposed on the body structure, and located on the side that is of the body structure and that is away from the substrate 100. As shown in FIG. 2(c) to FIG. 2(e), the transition structures may alternatively be disposed on the substrate 100 and/or the transition structures, and are located on the same side of the substrate 100 together with the optical waveguide 104. As shown in FIG. 2(c), when the transition structures are disposed on both the substrate 100 and the transition structures, the transition structures may be partially connected to the substrate 100, and partially connected to the optical waveguide 104. Herein, a transition structure is disposed between each electrode and a waveguide ridge. In an example, the transition structures may include a first transition structure 107 and a second transition structure 108. The first transition structure 107 is located between the optical waveguide 104 and the first electrode 105, and the second transition structure 108 is located between the optical waveguide 104 and the second electrode 106.

The transition structures are respectively disposed on the two sides of the ridge structure. A dielectric constant of the transition structure is greater than 8. Therefore, when a voltage is applied by the electrodes to the ridge structure, the voltage shared by a material between the electrodes and the ridge structure can be reduced, to increase the voltage applied by the electrodes to the ridge structure. This improves modulation efficiency of the phase shifter. This can reduce modulation voltages required by phase shifters when sizes of the phase shifters are the same. In addition, it can also be satisfied that the sizes of the phase shifters can be reduced under a same modulation voltage.

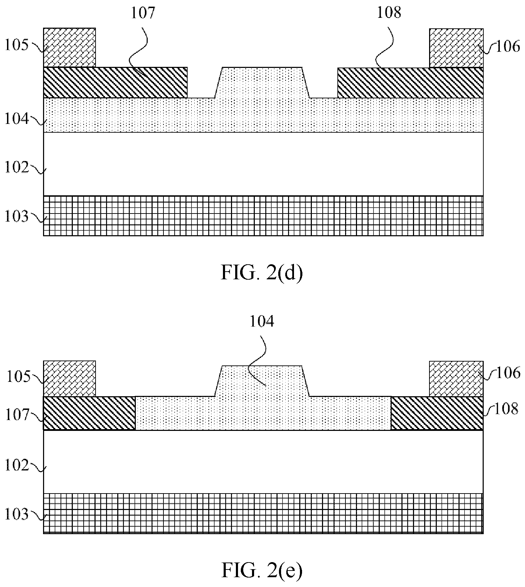

In some examples, as shown in FIG. 2(a), FIG. 2(b), and FIG. 2(d), the first electrode 105, the second electrode 106, the first transition structure 107, the second transition structure 108, and the ridge structure are jointly located on a same side of the body structure. In some examples, as shown in FIG. 2(c) and FIG. 2(e), the first electrode 105, the second electrode 106, the first transition structure 107, the second transition structure 108, and the optical waveguide 104 are jointly located on a same side of a first cladding layer 102 or the same side of the substrate 100. The first electrode 105 and the second electrode 106 are respectively located on the two sides of the ridge structure, the first transition structure 107 is located between the ridge structure and the first electrode 105, and the second transition structure 108 is located between the ridge structure and the second electrode 106.

In an example, as shown in FIG. 2(b), perpendicular to the extension direction of the optical waveguide 104, the first electrode 105 and the second electrode 106 are separately disposed on the body structure and located on the two sides of the ridge structure. The first transition structure 107 and the second transition structure 108 are separately disposed on the body structure, the first transition structure 107 is located between the ridge structure and the first electrode 105, and the second transition structure 108 is located between the ridge structure and the second electrode 106. In this way, it can be ensured that the transition structures are respectively located on the two sides of the ridge structure, to increase the voltage applied to the ridge structure.

In an example, as shown in FIG. 2(c), the first electrode 105 and the second electrode 106 are separately disposed on the substrate 100, and the first transition structure 107 and the second transition structure 108 are separately disposed on the substrate 100. In other words, both the ridge structure and the body structure are located between the first transition structure 107 and the second transition structure 108, and voltages applied by the electrodes to the ridge structure and the body structure can be increased at the same time.

In an example, as shown in FIG. 2(d), the first electrode 105 is disposed on the first transition structure 107, and the second electrode 106 is disposed on the second transition structure 108; and the first transition structure 107 and the second transition structure 108 are separately disposed on the body structure, and the first electrode 105 and the second electrode 106 are respectively located on the two sides of the ridge structure.

In an example, as shown in FIG. 2(e), the first electrode 105 is disposed on the first transition structure 107, and the second electrode 106 is disposed on the second transition structure 108. The first transition structure 107 and the second transition structure 108 are separately disposed on the substrate 100 or the second cladding layer 102.

In this embodiment of this application, the phase shifter may further include an insulation layer (not shown in the figure). The insulation layer is disposed between the first electrode 105 and the body structure, between the second electrode 106 and the body structure, between the first transition structure 107 and the body structure, and between the second transition structure 108 and the body structure, to increase reliability. The insulation layer may be a transparent material or an opaque material, and a refractive index of the insulation layer may be less than the refractive index of the optical waveguide, for example, silicon oxide.

In some examples, as shown in FIG. 2(b) to FIG. 2(e), the substrate 100 includes a substrate layer 103 and the first cladding layer 102, the first cladding layer 102 is disposed on the substrate layer 103, the optical waveguide 104 is disposed on the first cladding layer 102, and a refractive index of the first cladding layer 102 is less than the refractive index of the optical waveguide 104. In this way, it can be ensured that a refractive index of a part that is of the substrate 100 and that is close to the optical waveguide 104 is less than the refractive index of the optical waveguide 104, so that light in the optical waveguide 104 is propagated in a form of total reflection.

In some examples, as shown in FIG. 2(a) to FIG. 2(c), the phase shifter further includes a second cladding layer 101. The second cladding layer 101 covers a side that is of the optical waveguide 104 and that is away from the substrate 100. A refractive index of the second cladding layer 101 is less than the refractive index of the optical waveguide 104. The second cladding layer 101 is mainly used for reinforcement and mechanical protection. If reinforcement is not considered, the second cladding layer 101 may be vacuum or air. Optionally, the second cladding layer 101 further covers the first electrode 105, the second electrode 106, and sides that are of the first transition structure 107 and the second transition structure 108 and that are away from the substrate 100 or the substrate layer 103, to reinforce the entire structure.

In this embodiment of this application, the first transition structure 107 and the second transition structure 108 are separately spaced apart from the ridge structure, to prevent the transition structures from contacting the optical waveguide 104, and prevent the transition structures from affecting light propagation in the optical waveguide 104, for example, increasing losses. Optionally, the second cladding layer 101 is filled between the first transition structure 107 and the ridge structure and between the second transition structure 108 and the ridge structure.

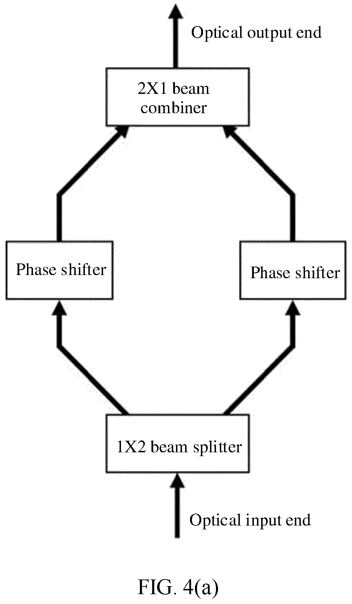

An embodiment of this application further provides an electro-optic modulator. As shown in FIG. 4(a) to FIG. 4(d), one or more phase shifters described in the foregoing embodiments are included. "A plurality of" means at least two.

In an example, as shown in FIG. 4(a), an electro-optic modulator includes two phase shifters. After light passes through a beam splitter, the beam splitter may split the light into a plurality of beams of light, and different light is separately modulated through different phase shifters. Herein, different phase shifters may modulate different light into a same phase or different phases. After modulation is complete, the different light passes through a beam combiner and is converged into a beam of light for output.

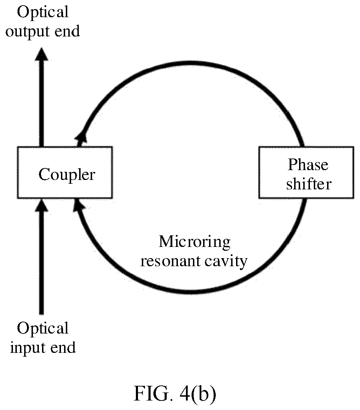

In an example, as shown in FIG. 4(b), an electro-optic modulator includes a microring resonant cavity, and a phase shifter is disposed in the microring resonant cavity. Light emitted by a coupler passes through the microring resonant cavity and then is incident to the coupler, and the phase shifter in the microring resonant cavity can modulate intensity and a phase of the light.

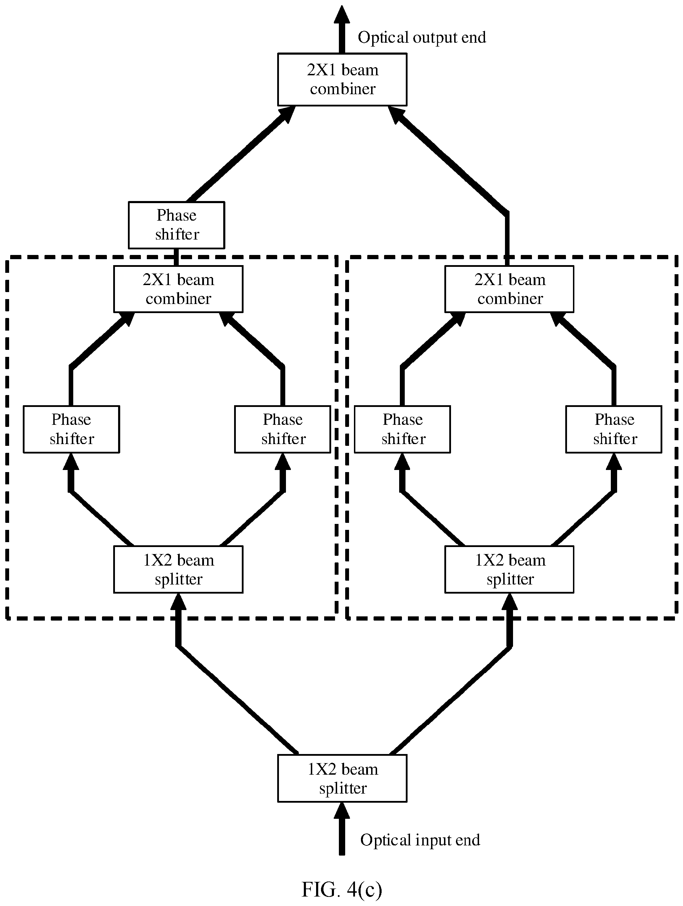

In an example, as shown in FIG. 4(c), an electro-optic modulator includes at least two electro-optic modulators shown in FIG. 4(a). A beam splitter may split a beam of light into a plurality of beams of light, and the plurality of beams of light are respectively incident to different electro-optic modulators shown in FIG. 4(a). Light emitted by the different electro-optic modulators shown in FIG. 4(a) may be converged into a beam of light after passing through a beam combiner again for output. The electro-optic modulator shown in FIG. 4(c) further includes at least one phase shifter. When a light beam is emitted from an electro-optic modulator shown in FIG. 4(a), the light beam may pass through the phase shifter again.

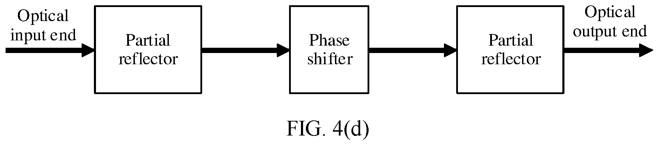

In an example, as shown in FIG. 4(d), an electro-optic modulator includes a phase shifter and a partial reflection apparatus. After passing through the phase shifter, light emitted through one partial reflection apparatus is incident to another partial reflection apparatus, and then is output through the another partial reflection apparatus.

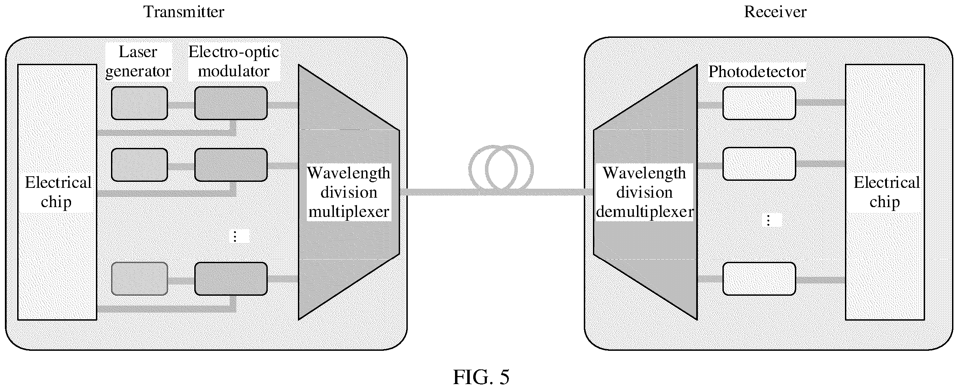

An embodiment of this application provides an optical communication system, including the electro-optic modulator, the phase shifter, or the electro-optic device described in the foregoing embodiments. Herein, the electro-optic modulator is used as an example for description. As shown in FIG. 5, an optical communication system may include a transmitter for electro-optic conversion and a receiver for optical-to-electrical conversion. The transmitter and the receiver are connected through an optical fiber. The transmitter may include an electrical chip, a laser generator, and an electro-optic modulator. Different laser generators may be configured to output continuous light of different wavelengths. Driven by the electrical chip, the electro-optic modulator modulates intensity and a phase of the continuous light based on an input electrical signal, to implement conversion from an electrical signal to an optical signal. Different electro-optic modulators may respectively modulate continuous light of different wavelengths. The transmitter may further include a wavelength division multiplexer, and the wavelength division multiplexer is configured to converge optical signals of different wavelengths. The receiver may include a wavelength division demultiplexer. The wavelength division demultiplexer decomposes the light input by the transmitter into optical signals of different wavelengths, and outputs the optical signals to different photodetectors. The photodetectors are configured to convert the optical signals into electrical signals.

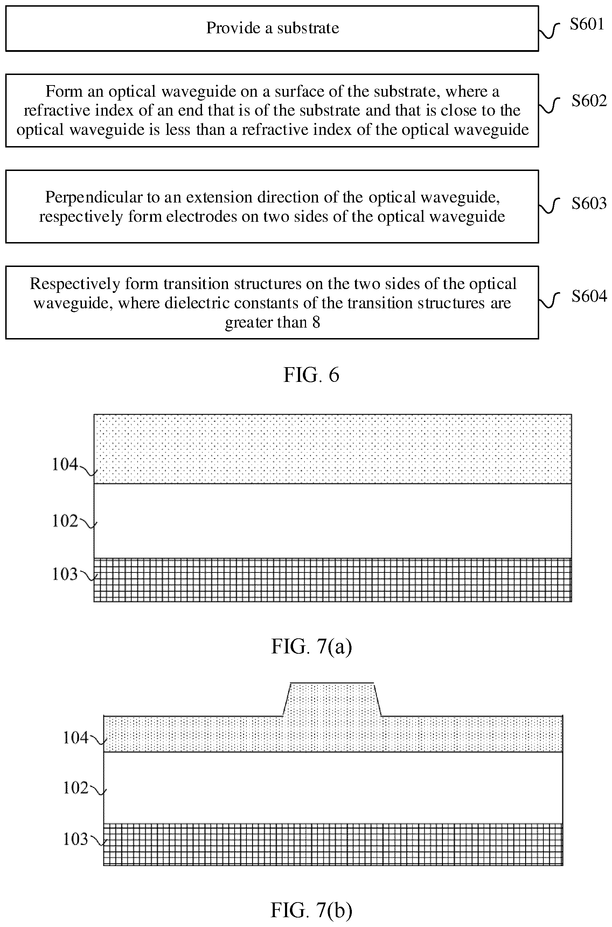

An embodiment of this application further provides a phase shifter manufacturing method. As shown in FIG. 6, the method includes the following steps.

Step S601: Provide a substrate 100, as shown in FIG. 7(a).

In an example, as shown in FIG. 7(a), the providing a substrate includes: forming a first cladding layer 102 on a substrate layer 103, to obtain the substrate 100. In an example, a refractive index of an end that is of the substrate and that is close to the optical waveguide 104 is less than a refractive index of the optical waveguide 104.

Step S602: Form the optical waveguide on a surface of the substrate, as shown in FIG. 7(b), where the refractive index of the end that is of the substrate and that is close to the optical waveguide is less than the refractive index of the optical waveguide.

In an example, an electro-optic crystal film layer is formed on the surface of the substrate 100, and a refractive index of an end that is of the substrate 100 and that is close to the electro-optic crystal film layer is less than a refractive index of the electro-optic crystal film layer. The electro-optic crystal thin film is etched to form the optical waveguide 104. Herein, etching may include partial etching or complete etching, and the optical waveguide 104 including a plate structure and a ridge structure may be formed through partial etching. In a case of complete etching, the ridge structure may be formed, and the ridge structure is used as the optical waveguide 104. It should be noted that the electro-optic crystal film layer may be formed on the surface of the substrate 100 in a bonding or attachment manner. In an example, the plate structure may be first formed on the surface of the substrate 100, and then the ridge structure is formed on the plate structure, to form the optical waveguide including the plate structure and the ridge structure. In an example, the surface of the substrate 100 includes a material for manufacturing a waveguide, for example, the electro-optic crystal film layer.

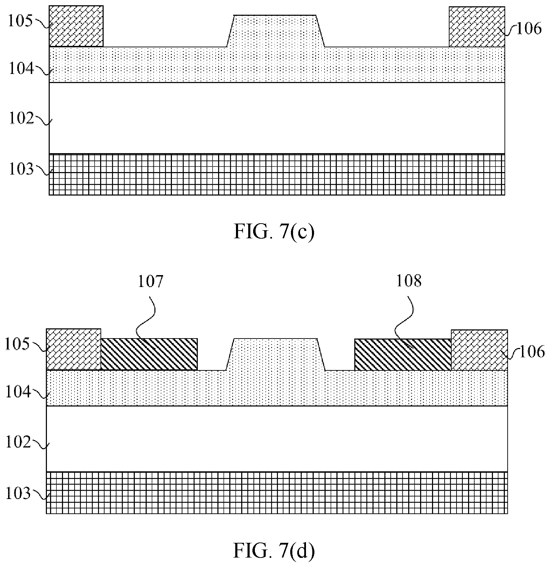

Step S603: Perpendicular to an extension direction of the optical waveguide 104, respectively form electrodes on two sides of the optical waveguide 104, as shown in FIG. 7(c).

Herein, a first electrode and a second electrode may be respectively formed on the two sides of the optical waveguide 104. In an example, the first electrode may be a signal electrode configured to apply a voltage, and the second electrode may be a grounding electrode. In an example, the first electrode may be a grounding electrode, and the second electrode may be a signal electrode configured to apply a voltage.

It should be noted that a material of the first electrode and/or a material of the second electrode may be gold, copper, aluminum, or the like. The first electrode and the second electrode may be respectively formed on the two sides of the optical waveguide 104 by using a process such as photoetching, metal sputtering, or metal stripping.

Step S604: Respectively form transition structures on the two sides of the optical waveguide 104, as shown in FIG. 7(d), where dielectric constants of the transition structures are greater than 8.

Herein, the transition structures may include a first transition structure 107 and a second transition structure 108. The first transition structure 107 is located between the optical waveguide 104 and the first electrode 105, and the second transition structure 108 is located between the optical waveguide 104 and the second electrode 106.

The transition structure may be formed by using a process such as chemical vapor deposition (chemical vapor deposition, CVD), sputtering, or stripping. As shown in FIG. 2(a) to FIG. 2(e), the transition structure may be formed on a surface of the substrate 100, the first cladding layer 102, or the body structure. Specifically, respectively forming transition structures on the two sides of the optical waveguide 104 includes: forming photoresist layers at ends that are of the optical waveguide and the electrode and that are away from the substrate 100, removing the photoresist layers at which transition structure regions need to be formed, forming transition structure layers at the photoresist layers and ends that are of the transition structure regions and that are away from the substrate 100, and removing remaining photoresist layers to form the transition structures. The transition structure region is a region in which the transition structure is formed on the optical waveguide.

It should be noted that a sequence of step S603 and step S604 is determined based on a specific case. In an example, to obtain the phase shifters shown in FIG. 2(a) to FIG. 2(c), step S603 may be performed before step S604, or step S604 may be performed before step S603. In an example, to obtain the phase shifters shown in FIG. 2(d) and FIG. 2(e), step S604 is performed before step S603.

Optionally, the phase shifter manufacturing method further includes: forming an insulation layer between the first electrode 105 and the body structure, between the second electrode 106 and the body structure, between the first transition structure 107 and the body structure, and between the second transition structure 108 and the body structure, to improve device long-term stability.

Optionally, the phase shifter manufacturing method further includes: forming a second cladding layer 101 on a side that is of the optical waveguide 104 and that is away from the substrate 100. The second cladding layer 101 may be silicon dioxide, silicon nitride, or the like. The second cladding layer 101 may be formed in a manner of chemical vapor deposition. When the second cladding layer 101 is air or vacuum, this step may be omitted.

In this embodiment of this application, for a specific structure of the phase shifter in the phase shifter manufacturing method and a location relationship between specific structures, refer to the descriptions of the specific embodiments of the phase shifter.

The foregoing provides specific implementations of this application. It should be understood that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A phase shifter, comprising: a substrate, an optical waveguide, a first electrode, a second electrode, a first transition structure, and a second transition structure, wherein the optical waveguide is disposed on the substrate; perpendicular to an extension direction of the optical waveguide, the first electrode and the second electrode are respectively located on two sides of the optical waveguide; the first transition structure is located between the optical waveguide and the first electrode, and the second transition structure is located between the optical waveguide and the second electrode; and a refractive index of an end that is of the substrate and that is close to the optical waveguide is less than a refractive index of the optical waveguide, and dielectric constants of the first transition structure and the second transition structure are greater than a dielectric constant of the optical waveguide.

2. The phase shifter according to claim 1**,** wherein the optical waveguide comprises a body structure and a ridge structure that are interconnected, and the ridge structure protrudes from the body structure towards a side away from the substrate; and the first transition structure and the second transition structure are separately spaced apart from the ridge structure.

3. The phase shifter according to claim 2, wherein perpendicular to the extension direction of the optical waveguide, the first electrode and the second electrode are separately disposed on the body structure and located on two sides of the ridge structure; and the first transition structure and the second transition structure are separately disposed on the body structure, the first transition structure is located between the ridge structure and the first electrode, and the second transition structure is located between the ridge structure and the second electrode.

4. The phase shifter according to claim 2, wherein the first electrode is disposed on the first transition structure, and the second electrode is disposed on the second transition structure; and the first transition structure and the second transition structure are separately disposed on the body structure, and the first electrode and the second electrode are respectively located on two sides of the ridge structure.

5. The phase shifter according to claim 1 or 2, wherein the first electrode and the second electrode are separately disposed on the substrate, and the first transition structure and the second transition structure are separately disposed on the substrate.

6. The phase shifter according to claim 1 or 2, wherein the first electrode is disposed on the first transition structure, the second electrode is disposed on the second transition structure, and the first transition structure and the second transition structure are separately disposed on the substrate.

7. The phase shifter according to claim 2, further comprising an insulation layer, wherein the insulation layer is disposed between the first electrode and the body structure and between the second electrode and the body structure.

8. The phase shifter according to claim 7, wherein the insulation layer is further disposed between the first transition structure and the body structure and between the second transition structure and the body structure.

9. The phase shifter according to any one of claims 1 to 8, wherein the substrate comprises a substrate layer and a first cladding layer, the first cladding layer is disposed on the substrate layer, the optical waveguide is disposed on a side that is of the first cladding layer and that is away from the substrate layer, and a refractive index of the first cladding layer is less than the refractive index of the optical waveguide.

10. The phase shifter according to any one of claims 3 to 9, further comprising a second cladding layer, wherein the second cladding layer covers a side that is of the optical waveguide and that is away from the substrate, and a refractive index of the second cladding layer is less than the refractive index of the optical waveguide.

11. The phase shifter according to claim 10, wherein the second cladding layer is filled between the first transition structure and the ridge structure and between the second transition structure and the ridge structure.

12. The phase shifter according to any one of claims 1 to 11, wherein a material of the optical waveguide is lithium niobate, an electro-optic polymer, tantalum niobate, barium titanate, or lead zirconate titanate.

13. The phase shifter according to any one of claims 1 to 12, wherein a material of the first transition structure and/or a material of the second transition structure are/is barium titanate, titanium dioxide, aluminum oxide, magnesium oxide, LaF₃, LaYO₃, or LaAlO₃.

14. The phase shifter according to any one of claims 1 to 13, wherein a refractive index of the first transition structure and/or a refractive index of the second transition structure are/is less than the refractive index of the optical waveguide.

15. An electro-optic device, comprising the phase shifter according to any one of claims 1 to 14.

16. The electro-optic device according to claim 15, wherein the electro-optic device is an electro-optic modulator, an electro-optic switch, or an electric field sensor.

17. An optical communication system, comprising the phase shifter according to any one of claims 1 to 14, or the electro-optic device according to claim 15 or 16.

18. A phase shifter manufacturing method, comprising:
providing a substrate;
forming an optical waveguide on a surface of the substrate, wherein a refractive index of an end that is of the substrate and that is close to the optical waveguide is less than a refractive index of the optical waveguide; and
perpendicular to an extension direction of the optical waveguide, respectively forming a first electrode and a second electrode on two sides of the optical waveguide, and respectively forming a first transition structure and a second transition structure on the two sides of the optical waveguide, wherein the first transition structure is located between the optical waveguide and the first electrode, the second transition structure is located between the optical waveguide and the second electrode, and dielectric constants of the first transition structure and the second transition structure are greater than a dielectric constant of the optical waveguide.

19. The phase shifter manufacturing method according to claim 18, wherein the optical waveguide comprises a body structure and a ridge structure that are interconnected, the ridge structure protrudes from the body structure towards a side away from the substrate, and the first transition structure and the second transition structure are separately spaced apart from the ridge structure.

20. The phase shifter manufacturing method according to claim 19, further comprising: forming an insulation layer between the first electrode and the body structure and between the second electrode and the body structure.

21. The phase shifter manufacturing method according to claim 19 or 20, further comprising: forming the insulation layer between the first transition structure and the body structure and between the second transition structure and the body structure.

22. The phase shifter manufacturing method according to claim 18, wherein the providing a substrate comprises:
forming a first cladding layer on a substrate layer to obtain the substrate, wherein a refractive index of the first cladding layer is less than the refractive index of the optical waveguide, and an electro-optic crystal film layer is formed on a side that is of the first cladding layer and that is away from the substrate layer.

23. The phase shifter manufacturing method according to claim 18, further comprising: forming a second cladding layer on a side that is of the optical waveguide and that is away from the substrate, wherein a refractive index of the second cladding layer is less than the refractive index of the optical waveguide.
